# EUROPEAN PATENT SPECIFICATION

(11) **EP 2 904 908 B1**
(45) Date of publication and mention of the grant of the patent: **03.04.2019**
(21) Application number: 13843492.3
(22) Date of filing: 02.10.2013
(51) Int. Cl.: A23L 27/20, A23L 2/56, A23L 27/26

(54) **CHICKEN FLAVOR COMPOSITION AND CHICKEN TASTE ENHANCER**
HUHNGESCHMACKSZUSAMMENSETZUNG UND HUHNGESCHMACKSVERSTÄRKER
COMPOSITION D'ARÔME DE POULET ET EXHAUSTEUR DE GOÛT DE POULET

(30) Priority: 02.10.2012 JP 2012220788
(43) Date of publication of application: 12.08.2015
(73) Proprietor: Takasago International Corporation, Tokyo 144-8721 (JP)
(72) Inventor: NAKATOH Azusa, Hiratsuka-shi Kanagawa 254-0073 (JP); WATANABE Akihiko, Hiratsuka-shi Kanagawa 254-0073 (JP); SUGIMOTO Daisuke, Hiratsuka-shi Kanagawa 254-0073 (JP); NAGAHASHI Hisaya, Hiratsuka-shi Kanagawa 254-0073 (JP); KASUGA Hisae, Hiratsuka-shi Kanagawa 254-0073 (JP)
(74) Representative: Takeuchi, Maya
(86) International application number: PCT/JP2013/076855
(87) International publication number: WO 2014/054704

(56) References cited:
- EP-A1- 2 904 909
- JP-A- H11 215 967
- JP-A- S60 232 073
- JP-A- 2005 530 481
- JP-A- 2009 503 146
- CERNY C ED - NOLLET LEO M L ET AL: "Handbook of Meat, Poultry and Seafood Quality, Chapter 13: Savory Flavors", 10 December 2007 (2007-12-10), HANDBOOK OF MEAT, POULTRY AND SEAFOOD QUALITY, BLACKWELL PUBLISHING, AMES, IOWA [U.A.], PAGE(S) 163 - 181, XP002547343, ISBN: 978-0-8138-2446-8 * table 13.3 *
- NOLEAU, I. ET AL.: 'Volatile components of roasted chicken fat' LEBENSMITTEL-WISSENSCHAFT UND -TECHNOLOGIE vol. 20, no. 1, 1987, pages 37 - 41, XP008179084
- SWOBODA, P. A. T. ET AL.: 'Metallic odour caused by vinyl ketones formed in the oxidation of butterfat. The identification of octa-1, cis-5-dien-3-one' J. SCI. FD AGRIC. vol. 28, 1977, pages 1019 - 1024, XP055251585
- BRUNA, J. M. ET AL.: 'Changes in selected biochemical and sensory parameters as affected by the superficial inoculation of Penicillium camemberti on dry fermented sausages' INT. J. FOOD MICROBIOL. vol. 85, 2003, pages 111 - 125, XP 009062613
- MAJCHER, M. A. ET AL.: 'Effect of cysteine and cystine addition on sensory profile and potent odorants of extruded potato snacks' J. AGRIC. FOOD CHEM. vol. 55, 2007, pages 5754 - 5760, XP055251601
- NAGAHASHI, H.: 'Niku no Kaori Meat Flavor ni Tsuite' THE TAKASAGO TIMES 1998, pages 6 - 13, XP008179090
- NAKATOH, A.: 'New approach to home style flavor creatiojn prawn and chicken' TAKASAGO SYMPOSIUM 2012 June 2013, KORYO, pages 69 - 79, XP008179092

## Description

### Technical Field

The present invention relates to a method or use for imparting and / or enhancing a chicken flavor, the method comprising adding a chicken flavour composition comprising 1,5-octadien-3-ol.

### Background Art

Conventionally, chicken flavor compositions use materials, for example, such as (1) an animal or a vegetable extract, (2) a yeast extract, (3) an animal or a vegetable protein hydrolysate, (4) a heating cooking flavor, and (5) a synthetic flavoring, and one or more of these may be appropriately combined and prepared according to the intended use to obtain a chicken flavor composition (Non Patent Literature 1).

As flavor characteristics desired for a chicken flavor composition, a natural flavor and a richness characteristic of chicken, and a flavor characteristic that evokes a boiled flavor, a fried flavor, a roast flavor, or the like that stimulates appetite in harmony with a dish are required.

The above-mentioned (2) yeast extract contains relatively larger quantities of an umami component glutamic acid, and therefore are mainly used to complement umami (Patent Literatures 1 to 3). It has been investigated to use this expecting an effect on meat taste and flavor.

For example, Patent Literature 4 discloses that a yeast extract containing a free proline in 8.0% or more of a free amino acid composition can be applied to impart the characteristic sweetness of animal protein hydrolysates.

On the other hand, components that have effects on meat richness and flavor have been investigated. For example, Patent Literature 5 proposes pyrazine compounds as a seasoning that can impart richness to a food or drink. A seasoning is proposed which contains, as a pyrazine compound, specifically, one or more compounds selected from a group consists of 2-methylpyrazine, 2,5-dimethylpyrazine, 2,6-dimethylpyrazine, 2,3,5-trimethylpyrazine, tetramethylpyrazine, 2,5-diethylpyrazine, 2,6-diethylpyrazine, 2,3-diethyl-5-methylpyrazine, and 2-ethyl-3,5-dimethylpyrazine.

Patent Literature 6 proposes, as a stronger and more desirable meat flavor composition, a meat flavor composition characterized in that it contains a flavoring containing at least one or more compound selected from a group consists of (A) pyrroles, (B) pyridines, (C) pyrazines, (D) oxazoles, (E) oxazolines, (F) amines, (G) thiazoles, (H) thiazolines, (I) thiazolidines, (J) thiols, (K) sulfides, (L) thioethers, (M) sulfur-containing carboxylic acids, (N) quinoxalines, and (O) furanones.

In preparation of a chicken flavor composition by using a synthetic flavoring, an odor analysis data of heat-treated chicken meat and chicken bone are generally used as a reference.

Odor analysis is typically performed by gas chromatography, and the analysis values are generally shown by being sorted in order of odor retention time (hereinafter, also referred to simply as "retention time"), or by being classified according to functional group. Therefore, a flavor preparing person who refers to the odor analysis data often start preparation by selecting various synthetic flavorings referring to the retention time or according to the functional group.

1,5-Octadien-3-ol is a known compound contained in roast chicken, cauliflower and the like, and is known as a compound which has an odor that evokes a tree aroma or a geranium aroma (Non Patent Literatures 2 and 3). On the other hand, 1,5-octadien-3-one is a known compound contained in beef and the like, and is known to have a metallic odor or a geranium odor (Non Patent Literatures 4 to 8).

### Prior Art Literatures

### Patent Literatures

Patent Literature 1: JP-A-2005-102549
Patent Literature 2: JP-A-10-327803
Patent Literature 3: WO 99/16860
Patent Literature 4: WO 2008/091519
Patent Literature 5: JP-A-11-313635
Patent Literature 6: JP-A-2005-15683

### Non Patent Literatures

Non Patent Literature 1: Patent Office Publication, Published Collection of Well-Known Prior Arts [Flavor] vol. 2, Food Flavors 3.9.4 Chicken Flavor, published on January 14, 2000
Non Patent Literature 2: Lebensm. Wiss. Technol., 20 (1987), pp. 37-41
Non Patent Literature 3: J. Agric. Food Chem., 2002, 50, pp. 6459-6467
Non Patent Literature 4: Journal of food science, Vol.61 (1996), pp.1271-1274
Non Patent Literature 5: Z Lebensm Unters Forsch A (1997) 205: pp.232-238
Non Patent Literature 6: Z Lebensm Unters Forsch A (1997) 204: pp.3-6
Non Patent Literature 7: Z Lebensm Unters Forsch (1988) 186: pp.489-494
Non Patent Literature 8: Journal of the Science of Food and Agriculture, Vol.28, 11, pp.1019-1024, November 1977
Non Patent Literature 9: Handbook of Meat, Poultry and Seafood Quality (2007) 163-181

### Summary of Invention

### Technical Problem

However, it is rarely the case that a chicken flavor composition prepared by directly replicating the quantitative analysis data of odor components is usable as a composition with the intended chicken flavor, and usually, satisfying flavor was not able to be obtained.

Generally used synthetic flavoring-based chicken flavors are designed flavors that highlight or elaborate the characteristic odor components of chicken by finding the specific odor components of chicken through odor analyses. Specifically, the intended chicken can be recognized by using a chicken flavor composition in combination with a color and a taste of a final product relating chicken, and the desired chicken flavor could not be reproduced by the flavor itself.

As noted above, in order to prepare desired chicken flavor compositions, they were often composed of, mainly, materials such as (1) an animal or a vegetable extract, (2) a yeast extract, (3) an animal or a vegetable protein hydrolysate, (4) a heating cooking flavor, and (5) a synthetic flavoring. However, because chicken flavor compositions using such materials are of low potency, novel materials are needed and there was room for improvement for the preparation of a composition for obtaining a stronger and more desirable chicken flavor.

Compounds such as 1,5-octadien-3-ol and 1,5-octadien-3-one are known as odor components, as noted above. However, use of 1,5-octadien-3-ol for imparting or enhancing a chicken flavor that accompanies a perception of boiled flavor, a perception of fried flavor, or a perception of roast flavor, particularly a chicken flavor that accompanies a perception of boiled flavor was not known.

As used in the present specification, "desirable chicken flavor" means that flavor characteristics (chicken flavor) are more desirable, that evoke such as a flavor of a soup that results from boiling chicken meat or chicken bone or the flavor that results from sauteing chicken (a perception of boiled flavor), a flavor of fried chicken that results from frying chicken meat or chicken bone with oil (a perception of fried flavor), and a flavor of roast meat that results from roasting chicken meat or chicken bone (a perception of roast flavor).

### Solution to Problem

The present inventors conducted intensive studies to find a solution to the foregoing problems, and found that a chicken flavor composition obtained by mixing 1,5-octadien-3-ol surprisingly has a chicken flavor with strong flavor and body, and an excellent roast flavor, resulted in completion of the present invention.

Specifically, the present invention relates to methods and uses according to claims 1 to 12.

### Advantageous Effects

Also provided is a chicken flavor composition which is useful as a flavor enhancer or the like for food, drink, seasonings or the like, and which has an excellent chicken flavor that accompanies a perception of boiled flavor, a perception of fried flavor, or a perception of roast flavor, by mixing 1,5-octadien-3-ol with a chicken flavor composition.

### Description of Embodiments

As used in the present specification, "mass%" and "mass part", and "weight%" and "weight part" have the same meaning, respectively, and when simply mention "%", "ppm", and "ppb", they indicate "weight%", "weight ppm", and "weight ppb", respectively.

The chicken flavor composition contains at least one of 1,5-octadien-3-ol. The following describes 1,5-octadien-3-ol.

For 1,5-octadien-3-ol, there exist (3S)-form and (3R)-form due to a single asymmetric carbon within the molecule, and there exist two geometric isomers, (5E)-form and (5Z)-form, depending on cis-trans resulting from the substituents on the double bond. Specifically, there are four kinds, (3S)-(5E)-1,5-octadien-3-ol, (3R)-(5E)-1,5-octadien-3-ol, (3S)-(5Z)-1,5-octadien-3-ol, and (3R)-(5Z)-1,5-octadien-3-ol.

All of these 1,5-octadien-3-ol are in oil (liquid) form at ordinary temperature.

The present invention may use any isomer of 1,5-octadien-3-ol.

These isomers can be distinguished on the basis of the retention time in gas chromatography. In this specification, no distinction is made for these isomers, and they are collectively referred to as "1,5-octadien-3-ol".

As the 1,5-octadien-3-ol , ones obtained by extraction from natural products may be used, or ones obtained by chemical synthesis (for example, ones synthesized according to the methods described in Non Patent Literature 8) may be used. The ones obtained from natural products and obtained by chemical synthesis may be used in a combination.

The content of the 1,5-octadien-3-ol in the chicken flavor composition is, by their total content, preferably 0.001 ppm to 1000 ppm, more preferably 0.01 ppm to 100 ppm, and further preferably 0.1 ppm to 10 ppm. A content of 0.001 ppm or more, the present invention can sufficiently exhibit effects, and with a content of 1000 ppm or less, an odorant note becomes more desirable as a chicken flavor, and therefore they are preferred.

The chicken flavor composition may contain other odor components.

Non-limiting examples of such other odor components include known synthetic flavoring compounds, including: hydrocarbons such as limonene, ocimene, α-pinene, β-pinene, γ-terpinene, sabinene, and myrcene; alcohols such as linalol, citronellol, dihydrolinalol, tetrahydromugol, myrcenol, dihydromyrcenol, tetrahydromyrcenol, ocimenol, terpineol, 3-thujanol, benzyl alcohol, β-phenylethyl alcohol, α-phenylethyl alcohol, and cis-3-hexenol; aldehydes such as acetaldehyde, n-hexanal, n-heptanal, n-octanal, n-nonanal, cis-3-hexenal, cis-6-nonenal, 3,5,5-trimethylhexanal, decanal, undecanal, 2-methyldecanal, dodecanal, tridecanal, tetradecanal, trans-2-hexenal, trans-4-decenal, cis-4-decenal, trans-2-decenal, 10-undecenal, trans-2-undecenal, trans-2-dodecenal, 3-dodecenal, trans-2-tridecenal, 2,4-hexadienal, 2,4-decadienal, 2,4-dodecadienal, 5,9-dimethyl-4,8-decadienal, citral, citronellal, benzaldehyde, cuminaldehyde, vanillin, and ethyl vanillin; ketones such as 2-butanone, 3-heptanone, 3-octanone, 2-nonanone, 2-undecanone, 2-tridecanone, methyl heptenone, dimethyl octenone, geranyl acetone, 2,3,5-trimethyl-4-cyclohexenyl-1-methylketone, 3-methyl-2,4-nonanedione, Nerone (Givaudan, registered trade mark), nootkatone, dihydronootkatone, acetophenone, and 4,7-dihydro-2-isopentyl-2-methyl-1,3-dioxepin; esters such as propyl formate, octyl formate, linalyl formate, citronellyl formate, geranyl formate , neryl formate, terpinyl formate, ethyl acetate, isopropyl acetate, cis-3-hexenyl acetate, trans-2-hexenyl acetate, octyl acetate, nonyl acetate, decyl acetate, dodecyl acetate, dimethyl undecadienyl acetate, ocimenyl acetate, myrcenyl acetate, dihydromyrcenyl acetate, linalyl acetate, citronellyl acetate, geranyl acetate, neryl acetate, tetrahydromugol acetate, lavandulyl acetate, nerolidol acetate, dihydrocuminyl acetate, terpinyl acetate, citryl acetate, nopyl acetate, dihydroterpinyl acetate, 2,4-dimethyl-3-cyclohexenylmethyl acetate, myraldyl acetate, boeticol acetate, decenyl propionate, linalyl propionate, geranyl propionate, neryl propionate, terpinyl propionate, tricyclodecenyl propionate, styralyl propionate, octyl butyrate, neryl butyrate, cinnamyl butyrate, isopropyl isobutyrate, octyl isobutyrate, linalyl isobutyrate, neryl isobutyrate, linalyl isovalerate, terpinyl isovalerate, phenylethyl isovalerate, 2-methylpentyl 2-methyl valerate, methyl 3-hydroxyhexanoate, ethyl 3-hydroxyhexanoate, methyl octanoate, octyl octanoate, linalyl octanoate, methyl nonanoate, methyl undecylenate, linalyl benzoate, methyl cinnamate, isoprenyl angelate, methyl geranate, and triethyl citrate; phenols such as thymol, carvacrol, and β-naphthol isobutyl ether; lactones such as γ-undecalactone, and δ-dodecalactone; fatty acids such as acetic acid, propionic acid, butyric acid, valeric acid, hexanoic acid, octanoic acid, decanoic acid, dodecanoic acid, 2-decenoic acid, and geranic acid; sulfides such as diallyl sulfide, diallyl disulfide, dipropyl disulfide, methyl propyl disulfide, allyl propyl disulfide, and diallyl trisulfide; and nitrogen- or sulfur-containing compounds such as methyl anthranilate, ethyl anthranilate, methyl N-methyl anthranilate, methyl N-2'-methyl pentylidene anthranilate, ligantraal, dodecanenitrile, 2-tridecenenitrile, geranyl nitrile, citronellyl nitrile, 3,7-dimethyl-2,6-nonadienonitrile, indole, 5-methyl-3-heptanoneoxime, thiogeraniol, limonenethiol, and P-menthyl-8-thiol, and
chicken meat and/or chicken bone extracts; flavors with chicken flavor obtained by solvent extraction, hydrodistillation, enzyme treatment, heat reactions, and the like; fishery product extracts; plant essential oils such as peppermint oil, spearmint oil, and spice essential oils of such as ginger, pepper, and onion; and oily extracts such as spice extracts, and oleoresins thereof.

These may be arbitrarily combined and mixed to prepare a chicken flavor composition.

In the chicken flavor composition the mass ratio of the total content of the 1,5-octadien-3-ol to other odor components is preferably 1:9 to 1:99.9 from the standpoint of improving the chicken flavor.

The chicken flavor composition may contain components other than the odor components, exemplified as suitable solvents for dissolving the odor components. Examples thereof include water, ethyl alcohol, glycerine, propylene glycol, triacetin, middle-chain fatty acid glycerine ester, food oils and fats such as food vegetable oils, natural pigments usable for food or drink, vitamins, vegetable resins, and the like.

From the standpoint of ease of handling of the composition, these are contained in preferably 0 to 99 mass% of the chicken flavor composition.

A chicken flavor composition prepared into a liquid form by using the foregoing solvents may be prepared into a powder form by adding carriers such as lactose, dextrin, gum arabic, and cyclodextrin, or into an emulsion with the use of various emulsifiers usable for food or drink. Besides, a composition may be prepared and used in arbitral form such as a paste form, a granule form, and a microcapsule according to its intended use.

The chicken flavor composition preferably has a chicken flavor selected from a boiled flavor, a fried flavor, or a roast flavor.

The chicken flavor composition can impart a chicken flavor to a food, a drink or a seasoning by being added thereto. Specifically, a food or drink with an imparted chicken flavor can easily be produced even if the food, the drink or the seasoning does not have any chicken flavor.

A food, a drink or a seasoning with the enhanced chicken flavor can be obtained by adding the chicken flavor composition to a food, a drink or a seasoning that already has a chicken flavor.

Such food, drink or seasoning (hereinafter, also referred to simply as "chicken flavored food or drink", or "chicken flavored seasoning", respectively) containing the chicken flavor composition are not particularly limited. Preferably, these are food, drink or seasonings relating chicken, such as a chicken flavored food or drink or a chicken flavored seasoning as represented by soup, instant noodle, snack, and the like.

A compounding amount of the chicken flavor composition to the chicken flavored food or drink or the chicken flavored seasoning varies depending on such as the intended use, and the type and the odorant note strength of the chicken flavor enhancer. For example, a concentration range may be 0.001% to 10%, preferably 0.01 to 3%.

Also provided is a chicken flavor enhancer containing 1,5-octadien-3-ol. The flavor enhanced by the enhancer is preferably a chicken flavor selected from a boiled flavor, a fried flavor, and a roast flavor.

As the 1,5-octadien-3-ol here, any of the foregoing geometric isomers may be used, and two or more of them may be used in combination.

The total of a compounding amount of the 1,5-octadien-3-ol in the chicken flavor enhancer of the present invention to the chicken flavored food or drink or the chicken flavored seasoning varies depending on such as the intended use and the type of the chicken flavor enhancer. For example, a concentration range may be 0.0001 ppb to 10 ppm, preferably 0.001 ppb to 1 ppm, more preferably 0.01 ppb to 0.1 ppm.

As the content of the 1,5-octadien-3-ol in the chicken flavor enhancer, in their total content, 0.001 ppm to 1000 sufficiently exhibit effects, and an odorant note becomes more desirable as a chicken flavor.

The chicken flavor enhancer may be added to the chicken flavored food or drink or the chicken flavored seasoning to enhance the chicken flavors of them, and may be added to various food, drink or seasonings having no chicken flavor to easily produce a food, a drink or a seasoning that has an imparted chicken flavor.

### Examples

The following describes the present invention in greater detail by using Examples. Concerning to the unit in the formulations described below, composition ratios indicate, unless specifically mentioned, mass ratios.

### (Example 1) Chicken Flavor Enhancer

In Example 1, a chicken flavor enhancer was prepared by preparing a 0.1% aqueous solution of 1,5-octadien-3-ol. The 1,5-octadien-3-ol here is (5Z)-1,5-octadien-3-ol, obtained by the synthesis method described in Non Patent Literature 8.

### (Reference Example 2) Chicken Flavor Enhancer

In reference Example 2, a chicken flavor enhancer was prepared by preparing a 0.1% aqueous solution of 1,5-octadien-3-one. The 1,5-octadien-3-one here is (5Z)-1,5-octadien-3-one, obtained by the synthesis method described in Non Patent Literature 8.

### (Examples 3 and 4) Chicken Flavor Composition

Chicken flavor compositions were obtained by mixing each component according to the formulations presented in the Table 1 below. The obtained compositions both had a boiled flavor.

**[Table 1]**

| (mass part) | | |
|---|---|---|
| Component | Example 3 | Example 4 |
| Hexanal | 7 | 7 |
| trans-2-Decenal | 2 | 2 |
| 2,4-Decadienal | 46 | 46 |
| Dimethyl sulfide 1% ethanol solution | 10 | 10 |
| Linalool | 2 | 2 |
| Terpineol | 3 | 3 |
| 1-Octen-3-ol | 3 | 3 |
| Maltol 10% ethanol solution | 10 | 10 |
| Diacetyl 1% ethanol solution | 5 | 5 |
| Acetoin 1% ethanol solution | 5 | 5 |
| Chicken flavor enhancer of Example 1 | 0.5 | |
| Chicken flavor enhancer of | | 0.5 |
| ReferenceExample 2 | | |
| Ethanol | Remainder | Remainder |
| Total | 1000 | 1000 |

### (Comparative Example 1) Chicken Flavor Composition

A chicken flavor composition was prepared in the same manner as in Example 3, except that the chicken flavor enhancer was not contained.

### (Application Example 1) Chicken Flavor Oil

To 200 g of chicken carcass was added 1 kg of water and the mixture was heated at 120°C for 4 hours. After cooling, an insoluble solid was removed to obtain 850 g of chicken extract. The extract was concentrated under reduced pressure to mass of 1/3, and the resulting concentrate was, after adding 150 g of canola oil and the chicken flavor composition of Example 3 by 2 mass% with respect to the canola oil, stirred under heat at 100°C for 3 hours. The mixture was cooled, and centrifuged to collect the chicken flavor oil layer portion to obtain a present product 1 (chicken flavor oil).

### (Application Example 2) Chicken Flavor Oil

A present product 2 (chicken flavor oil) was obtained in the same manner as in Application Example 1, except that the chicken flavor composition of Example 4 was used instead of the chicken flavor composition of Example 3.

### (Comparative Application Example 1) Chicken Flavor Oil

A comparative product 1 (chicken flavor oil) was obtained in the same manner as in Application Example 1, except that the chicken flavor composition of Comparative Example 1 was used instead of the chicken flavor composition of Example 3.

The present product 1, the present product 2, and the comparative product 1 were each diluted in 20 times with canola oil, and evaluated for flavor in a sensory evaluation participated by 10 trained panelists. All panelists rated the present product 1 and the present product 2 as more imparting an impression of an enhanced top impact and a distinct edge, and more having an enduring chicken flavor than the comparative product 1.

### (Test Examples 1-1 to 1-8) Tests on the Effect of 1,5-Octadien-3-Ol in Chicken Flavor Oil

Chicken flavor enhancers of Test Examples 1-1 to 1-8 were each prepared by preparing 1,5-octadien-3-ol aqueous solutions in the same manner as in Example 1, with the 1,5-octadien-3-ol varied to have the concentrations shown in Table 2. Chicken flavor compositions of Test Examples 1-1 to 1-8 were prepared by each using the chicken flavor enhancers in Example 3 prepared instead of the chicken flavor enhancer of Example 1.

**[Table 2]**

| Test Examples | 1-1 | 1-2 | 1-3 | 1-4 | 1-5 | 1-6 | 1-7 | 1-8 |
|---|---|---|---|---|---|---|---|---|
| Concentration (ppm) | 0 | 0.005 | 0.05 | 0.5 | 5 | 50 | 500 | 5000 |

Chicken flavor oils of Test Examples 1-1 to 1-8 were obtained in the same manner as in Application Example 1, except that the chicken flavor compositions of Test Examples 1-1 to 1-8 were used instead of the chicken flavor composition of Example 3.

The chicken flavor oils of Test Examples 1-1 to 1-8 were each diluted in 20 times with canola oil, and evaluated for flavor in a sensory evaluation participated by 10 trained panelists. All panelists rated the chicken flavor oils of Test Examples 1-2 to 1-7 as notably having a roundness and a richness with a sense of harmony, and having enduring chicken flavor. The chicken flavor oils of Test Examples 1-4 to 1-6 were particularly found to have a desirable chicken flavor. On the other hand, all panelists rated that the chicken flavor oil of Test Example 1-1 did not sufficiently develop a perception of chicken flavor and that the chicken flavor oil of Test Example 1-8 was undesirable because of the odorant note that was different from a chicken flavor.

### (Test Examples 2-1 to 2-8 as reference Examples) Tests on the Effect of 1,5-Octadien-3-One in Chicken Flavor Oil

Chicken flavor enhancers of Test Examples 2-1 to 2-8 were each prepared by preparing 1,5-octadien-3-one aqueous solutions in the same manner as in Example 2, with the 1,5-octadien-3-one varied to have the concentrations shown in Table 3. Chicken flavor compositions of Test Examples 2-1 to 2-8 were prepared by each using the chicken flavor enhancers in Example 4 prepared instead of the chicken flavor enhancer of Example 2.

**[Table 3]**

| Test Examples | 2-1 | 2-2 | 2-3 | 2-4 | 2-5 | 2-6 | 2-7 | 2-8 |
|---|---|---|---|---|---|---|---|---|
| Concentration (ppm) | 0 | 0.005 | 0.05 | 0.5 | 5 | 50 | 500 | 5000 |

Chicken flavor oils of Test Examples 2-1 to 2-8 were obtained in the same manner as in Application Example 1, except that the chicken flavor compositions of Test Examples 2-1 to 2-8 were used instead of the chicken flavor of Example 4.

The chicken flavor oils of Test Examples 2-1 to 2-8 were each diluted in 20 times with canola oil, and evaluated for flavor in a sensory evaluation participated by 10 trained panelists. All panelists rated the chicken flavor oils of Test Examples 2-2 to 2-7 as notably having a roundness and a richness with a sense of harmony, and having enduring chicken flavor. The chicken flavor oils of Test Examples 2-4 to 2-6 were particularly found to have a desirable chicken flavor. On the other hand, all panelists rated that the chicken flavor oil of Test Example 2-1 did not sufficiently develop a perception of chicken flavor and that the chicken flavor oil of Test Example 2-8 was undesirable because of the odorant note that was different from a chicken flavor.

This application is based on Japanese Patent Application (No. 2012-220788) filed on October 2, 2012.

## Claims

1. A method for imparting a chicken flavor to a food, a drink or a seasoning, the method comprising adding a chicken flavor composition comprising 1,5-octadien-3-ol.

2. The method according to claim 1, the chicken flavor composition comprising a chicken flavor selected from a boiled flavor, a fried flavor, and a roast flavor.

3. The method according to claim 1 or 2, wherein a total content of the 1,5-octadien-3-ol in the chicken flavor composition is 0.001 ppm to 1000 ppm by mass.

4. The method according to any one of claims 1 to 3, wherein the chicken flavor composition comprising 1,5-octadien-3-ol is added to the food, the drink or the seasoning in a manner that the food, the drink or the seasoning comprises 0.0001 ppb to 10 ppm by mass of 1,5-octadien-3-ol.

5. A method for enhancing a chicken flavor of a food, a drink or a seasoning, the method comprising adding a chicken flavor enhancer comprising 1,5-octadien-3-ol.

6. The method according to claim 5, wherein a total content of the 1,5-octadien-3-ol in the chicken flavor enhancer is 0.001 ppm to 1000 ppm by mass.

7. The method according to claim 5 or 6, the chicken flavor enhancer enhancing a chicken flavor selected from a boiled flavor, a fried flavor, and a roast flavor.

8. The method according to any one of claims 5 to 7, wherein the chicken flavor enhancer comprising 1,5-octadien-3-ol is added to the food, the drink or the seasoning so that the food, the drink or the seasoning comprises 0.0001 ppb to 10 ppm by mass of 1,5-octadien-3-ol.

9. A use of 1,5-octadien-3-ol for imparting a chicken flavor to a food, a drink or a seasoning,

10. A use of 1,5-octadien-3-ol for enhancing a chicken flavor of a food, a drink or a seasoning.

11. The use according to claim 9 or 10 , wherein a total content of the 1,5-octadien-3-ol in the food, the drink or the seasoning is 0.0001 ppb to 10 ppm by mass.

12. The use according to any one of claims 9 to 11, wherein the chicken flavor is a boiled flavor, a fried flavor, or a roast flavor.

## Patentansprüche

1. Verfahren zum Verleihen eines Hühnergeschmacks an ein Lebensmittel, ein Getränk oder ein Würzmittel, wobei das Verfahren das Hinzufügen einer Hühnergeschmackszusammensetzung, umfassend 1,5-Octadien-3-ol, umfasst.

2. Verfahren nach Anspruch 1, wobei die Hühnergeschmackszusammensetzung einen Hühnergeschmack, ausgewählt aus einem Kochgeschmack, einem Bratgeschmack und einem Röstgeschmack, umfasst.

3. Verfahren nach Anspruch 1 oder 2, wobei ein Gesamtgehalt von dem 1,5-Octadien-3-ol in der Hühnergeschmackszusammensetzung 0,001 ppm bis 1000 ppm, bezogen auf Masse, beträgt.

4. Verfahren nach einem der Ansprüche 1 bis 3, wobei die Hühnergeschmackszusammensetzung, die 1,5-Octadien-3-ol umfasst, dem Lebensmittel, dem Getränk oder dem Würzmittel in einer Weise hinzugefügt wird, dass das Lebensmittel, das Getränk oder das Würzmittel 0,0001 ppb bis 10 ppm, bezogen auf Masse, von 1,5-Octadien-3-ol umfasst.

5. Verfahren zur Verstärkung eines Hühnergeschmacks eines Lebensmittels, eines Getränks oder eines Würzmittels, wobei das Verfahren das Hinzufügen eines Hühnergeschmacksverstärkers, umfassend 1,5-Octadien-3-ol, umfasst.

6. Verfahren nach Anspruch 5, wobei ein Gesamtgehalt von dem 1,5-Octadien-3-ol in dem Hühnergeschmacksverstärker 0,001 ppm bis 1000 ppm, bezogen auf Masse, beträgt.

7. Verfahren nach Anspruch 5 oder 6, wobei der Hühnergeschmacksverstärker einen Hühnergeschmack, ausgewählt aus einem Kochgeschmack, einem Bratgeschmack und einem Röstgeschmack, verstärkt.

8. Verfahren nach einem der Ansprüche 5 bis 7, wobei der Hühnergeschmacksverstärker, der 1,5-Octadien-3-ol umfasst, so dem Lebensmittel, dem Getränk oder dem Würzmittel hinzugefügt wird, dass das Lebensmittel, das Getränk oder das Würzmittel 0,0001 ppb bis 10 ppm, bezogen auf Masse, von 1,5-Octadien-3-ol umfasst.

9. Verwendung von 1,5-Octadien-3-ol zum Verleihen eines Hühnergeschmacks an ein Lebensmittel, ein Getränk oder ein Würzmittel.

10. Verwendung von 1,5-Octadien-3-ol zur Verstärkung eines Hühnergeschmacks eines Lebensmittels, eines Getränks oder eines Würzmittels.

11. Verwendung nach Anspruch 9 oder 10, wobei ein Gesamtgehalt von dem 1,5-Octadien-3-ol in dem Lebensmittel, dem Getränk oder dem Würzmittel 0,0001 ppb bis 10 ppm, bezogen auf Masse, beträgt.

12. Verwendung nach einem der Ansprüche 9 bis 11, wobei der Hühnergeschmack ein Kochgeschmack, ein Bratgeschmack oder ein Röstgeschmack ist.

## Revendications

1. Procédé destiné à communiquer une saveur de poulet à un aliment, une boisson ou un condiment, le procédé comprenant l'ajout d'une composition de saveur de poulet comprenant du 1,5-octadiène-3-ol.

2. Procédé selon la revendication 1, la composition de saveur de poulet comprenant une saveur de poulet sélectionnée parmi une saveur bouillie, une saveur frite et une saveur rôtie.

3. Procédé selon la revendication 1 ou 2, dans lequel une teneur totale du 1,5-octadiène-3-ol dans la composition de saveur de poulet est comprise entre 0,001 ppm et 1000 ppm en masse.

4. Procédé selon l'une quelconque des revendications 1 à 3, dans lequel la composition de saveur de poulet comprenant du 1,5-octadiène-3-ol est ajoutée à l'aliment, à la boisson ou au condiment de telle manière que l'aliment, la boisson ou le condiment comprend de 0,0001 ppb à 10 ppm en masse de 1,5-octadiène-3-ol.

5. Procédé destiné à renforcer une saveur de poulet d'un aliment, une boisson ou un condiment, le procédé comprenant l'ajout d'un exhausteur de saveur de poulet comprenant du 1,5-octadiène-3-ol.

6. Procédé selon la revendication 5, dans lequel une teneur totale du 1,5-octadiène-3-ol dans l'exhausteur de saveur de poulet est comprise entre 0,001 ppm et 1000 ppm en masse.

7. Procédé selon la revendication 5 ou 6, l'exhausteur de saveur de poulet renforçant une saveur de poulet est sélectionné parmi une saveur bouillie, une saveur frite et une saveur rôtie.

8. Procédé selon l'une quelconque des revendications 5 à 7, dans lequel l'exhausteur de saveur de poulet comprenant du 1,5-octadiène-3-ol est ajouté à l'aliment, à la boisson ou au condiment de telle sorte que l'aliment, la boisson ou le condiment comprend de 0,0001 ppb à 10 ppm en masse de 1,5-octadiène-3-ol.

9. Utilisation de 1,5-octadiène-3-ol de manière à communiquer une saveur de poulet à un aliment, une boisson ou un condiment,

10. Utilisation de 1,5-octadiène-3-ol de manière à renforcer une saveur de poulet d'un aliment, une boisson ou un condiment.

11. Utilisation selon la revendication 9 ou 10, dans laquelle une teneur totale du 1,5-octadiène-3-ol dans l'aliment, la boisson ou le condiment est comprise entre 0,0001 ppb et 10 ppm en masse.

12. Utilisation selon l'une quelconque des revendications 9 à 11, dans laquelle la saveur de poulet est une saveur bouillie, une saveur frite ou une saveur rôtie.
